# EUROPÄISCHE PATENTSCHRIFT

(11) **EP 0 346 689 B1**
(45) Veröffentlichungstag und Bekanntmachung des Hinweises auf die Patenterteilung: **05.10.1994**
(21) Anmeldenummer: 89109868.3
(22) Anmeldetag: 31.05.1989
(51) Int. Cl.: G01N 27/90

(54) **Einrichtung zur Wirbelstromprüfung der Rohre eines Wärmetauschers**
Apparatus for the eddy current testing of the pipes in a heat exchanger
Appareil pour le contrôle par courants de foucault des tuyaux d'un échangeur de chaleur

(30) Priorität: 15.06.1988 DE 3820423
(43) Veröffentlichungstag der Anmeldung: 20.12.1989
(73) Patentinhaber: SIEMENS AKTIENGESELLSCHAFT, 80333 München (DE)
(72) Erfinder: Adams, Helmar, D-8520 Erlangen (DE); Bögelein, Georg, D-8520 Erlangen (DE); Jacob, Heinz, D-8602 Memmelsdorf (DE)

(56) Entgegenhaltungen:
- EP-A- 0 242 947
- EP-A- 0 259 669
- EP-A- 0 301 906
- WO-A-86/04413
- FR-A- 2 250 994
- PATENT ABSTRACTS OF JAPAN vol. 7, no. 96 (P-193)(1241) 22. April 1983 & JP-A-58 022 951 ( MITSUBISHI JUKOGYO K. K. ) 10. Februar 1983

## Beschreibung

Die Erfindung bezieht sich auf eine Einrichtung zur Wirbelstromprüfung wie sie beispielsweise aus FR-A- 2 250 994 bekannt ist und ist anwendbar zur Prüfung der Rohre eines Wärmetauschers mit einem U-Rohrbündel.

Aus der DE-C-28 37 486 ist eine Einrichtung zur Wirbelstromprüfung bekannt, bei der eine Prüfsonde mit in zwei parallelen Ebenen quer zur Rohrachse angeordneten und in einem Spulenkörper eingebetteten Ringspulen vorgesehen ist. Die Prüfsonde ist einerseits über einen Führungskörper tragenden flexiblen Schlauch mit einem Schubschlauch verbunden und andererseits über einen Führungskörper tragenden flexiblen Schlauch an eine Einführungsspitze angeschlossen. Die flexiblen Schläuche haben eine größere Flexibilität als der Schubschlauch, über den mittels einer Schubvorrichtung die Prüfsonde in ein Rohr des U-Rohrbündels einschiebbar ist. Bei dieser bekannten Ausführung liegen die beiden Spulenachsen koaxial zur Längsachse der Prüfsonde auf dem Spulenkörper. Damit kann man zwar Fehler in dem geraden und gekrümmten Teil des zu prüfenden Rohres feststellen, es ist jedoch nicht möglich, die genaue Lage am Umfang des Rohres zu orten.

Es ist auch eine Wirbelstromsonde mit einer Spule bekannt, deren Andrückfläche sich nur über einen Teil des Innenumfanges des zu prüfenden Rohres erstreckt. Bei dieser Ausführung ist es erforderlich, die Sonde zur Abtastung des Rohres in Drehung zu versetzen.

Durch die US-A-4 303 884 ist eine Wirbelstromsonde bekannt geworden, die eine Vielzahl von axial verlaufenden elastischen Plastikstreifen aufweist, welche den Umfang des Prüfkopfes bilden. Auf jedem Streifen ist eine Spule für die Wirbelstromprüfung befestigt. Bei dieser Ausbildung ist es nicht erforderlich, die Sonde zu drehen, da bei der Einschubbewegung durch die Spulen die gesamte Innenoberfläche des zu prüfenden Rohres bestrichen wird. Die bekannte Ausführung eignet sich jedoch nur für die Prüfung von geraden Rohren. Die Lage eines Fehlers wird ferner nur durch ein Längenmaß angegeben, so daß daraus lediglich geschlossen werden kann, in welcher Höhe des Rohres der Fehler liegt.

Der Erfindung liegt die Aufgabe zugrunde, eine Einrichtung zur Wirbelstromprüfung anzugeben, mit der die Lage eines Fehlers im gekrümmten Teil des Rohres eines Wärmetauschers nicht nur durch ein Längenmaß, sondern auch durch ein Winkelmaß lokalisierbar ist, also die Fehlerstelle auch längs des Umfanges des zu prüfenden Rohres erkannt werden kann. Für die Auswertung der Wirbelstromprüfung und die zu ergreifenden Maßnahmen ist es wünschenswert, die genaue Lage eines Fehlers im Rohr ermitteln zu können, um nach Möglichkeit daraus Schlüsse zu ziehen, auf welche Ursache der Fehler zurückzuführen ist. Beispielsweise interessiert, ob der Fehler an einer Abstützungsstelle des Rohres eines Rohrbündels liegt. Derartige Abstützungen sind auch im gekrümmten Teil des Rohrbündels eines Wärmetauschers vorgesehen.

Erfindungsgemäß wird die genannte Aufgabe durch eine Einrichtung mit den Merkmalen des Patentanspruches 1 gelöst.

Auf diese Weise kann man Fehler auch in engen Krümmungsradien eines U-Rohres durch ein Längen- und Winkelmaß in einfacher Weise erfassen.

Weiterbildungen der Erfindung werden anhand der Zeichnung erläutert, in der ein Ausführungsbeispiel dargestellt ist. Dabei zeigt:
- FIG 1: einen Längsschnitt einer Wirbelstromsonde in vergrößertem Maßstab,
- FIG 2 bis 5: Querschnitte an den aus FIG 1 ersichtlichen Stellen,
- FIG 6: eine Einrichtung zur Wirbelstromprüfung in einer Seitenansicht,
- FIG 7: ein elektrisches Schaltbild der Lageerkennungseinheit der Sonde,
- FIG 8: einen Querschnitt der Kontaktanordnung der Lageerkennungseinheit und
- FIG 9: die Anordnung der Widerstände.

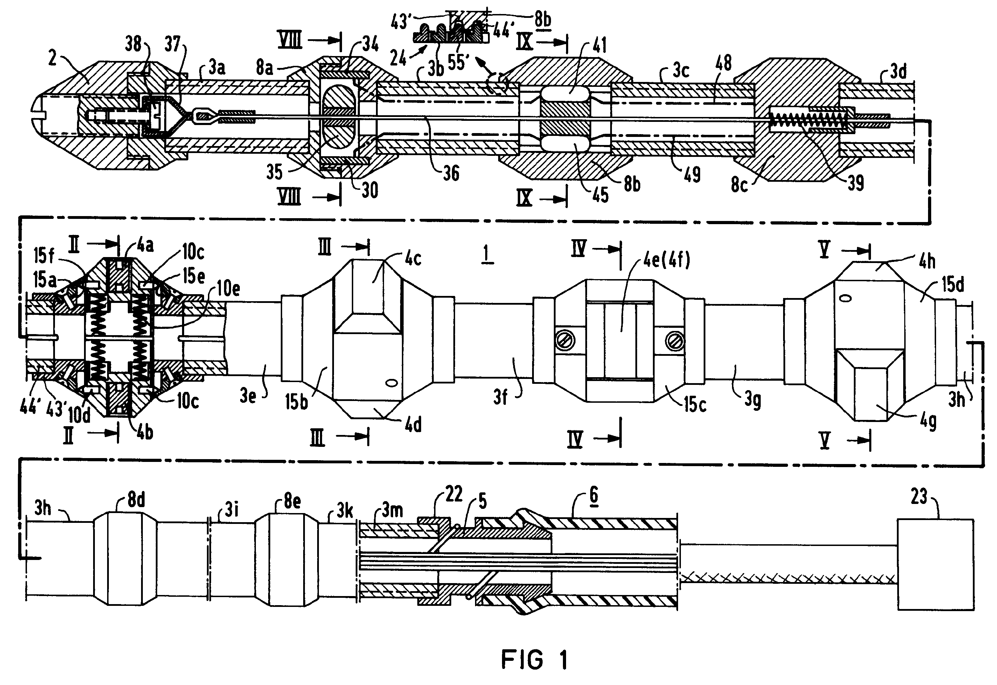

Wie aus FIG 1 und 6 zu ersehen ist, besteht die Einrichtung zur Wirbelstromprüfung für die Rohre eines Wärmetauschers mit einem U-Rohrbündel aus einer Prüfsonde 1, bei der eine Einführungsspitze 2 über elastische Schlauchstücke 3a bis 3m unter Zwischenschaltung von Abstützungen 8a bis 8g und Spulen 4a bis 4h mit einem als Steckerkörper ausgebildeten Anschlußkörper 5 verbunden ist, an den ein Schubschlauch 6 angeschlossen ist, welcher mittels einer Schubvorrichtung 7 in ein Rohr des U-Rohrbündels geschoben wird. Die elastischen Schlauchstücke 3a bis 3m, deren Flexibilität größer ist als die des Schubschlauches 6, werden in dem zu prüfenden Rohr durch die Abstützungen 8a bis 8g geführt, die ringförmig ausgebildet sind.

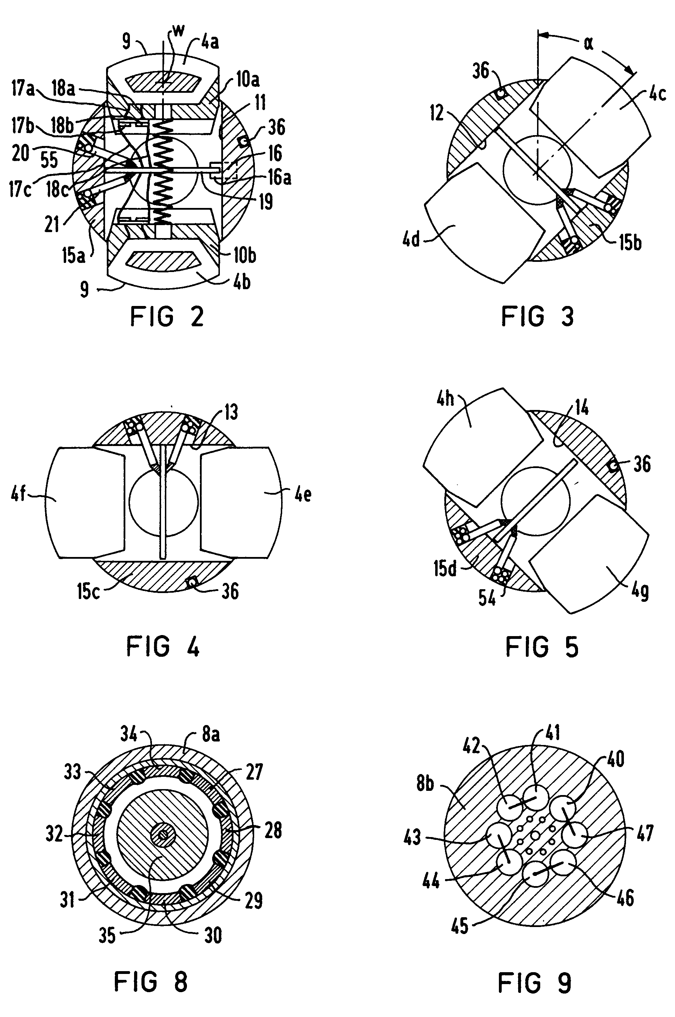

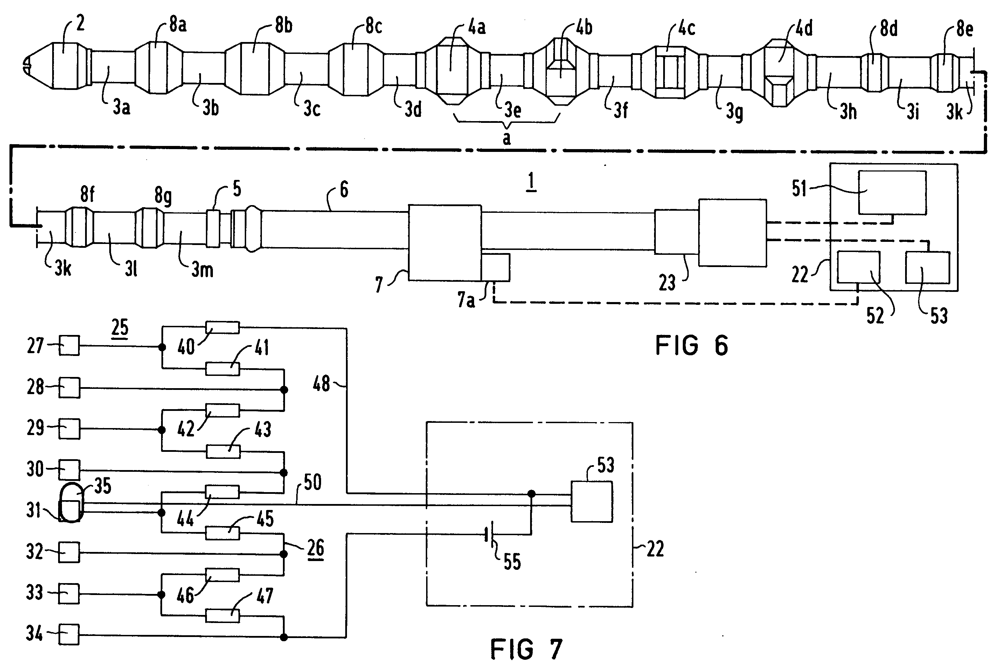

Aus FIG 1 in Verbindung mit den Figuren 3 bis 7 ist zu ersehen, daß die Andrückflächen 9 (FIG 2) der Spulen 4a bis 4h sich jeweils nur über einen Teil des Außenumfangs (Sektor) der Sonde 1 bzw. des Innenumfangs des zu prüfenden Rohres erstrecken. Die Spulen 4a bis 4h sind am Umfang der Sonde 1 um vorgegebene Winkel α (FIG 2, 3) und auch in der Sondenlängsachse um die Länge a (FIG 6) gegeneinander versetzt, so daß beim Hindurchschieben der Sonde 1 durch das zu prüfende Rohr jede Spule 4a bis 4h einen vorgegebenen Teilbereich der Innenfläche des Rohres abtastet. Die Spulen 4a bis 4h sind dabei mit ihrer Wicklungsachse w (in FIG 2 senkrecht zur Zeichenebene) parallel zur Sondenachse angeordnet und in Spulenträger 10a, 10b zumindest teilweise eingegossen. Diese Spulenträger 10a, 10b sind in senkrecht auf die Sondenachse stehenden Aussparungen 11 bis 14 von Spulenhaltern 15a bis 15d (FIG 2 - 5) beweglich angeordnet. Dabei haben die Spulenträger 10a, 10b parallel zur Sondenachse angeordnete Achszapfen 10c, 10d (FIG 1), die eine Wippbewegung und Höhenbewegung zulassen und hierzu in radialen Schlitzen 15e, 15f der Spulenhalter 15a bis 15d verschiebbar gelagert sind. Dadurch ist eine gute Anpassung der Andrückflächen 9 der Spulen an die Innenfläche des Rohres auch in Rohrkrümmungen erzielbar. Die Spulenträger 10a, 10b werden über Federn 10e in den Aussparungen 11 bis 14 nach außen gedrückt.

Im dargestellten Ausführungsbeispiel sind jeweils zwei Spulenträger 10a, 10b mit je einer Spule in einer Aussparung federnd angeordnet. Die Sonde 1 besitzt also vier in der Sondenlängsachse versetzt angeordnete Aussparungen 11 bis 14 mit je zwei Spulenträgern z.B. 10a, 10b, wobei die Aussparungen 11 bis 14 um Winkel von α = 45° gegeneinander versetzt angeordnet sind, so daß sich die Andrückflächen 9 der Spulen 4a bis 4h gegenseitig überlappen.

Die Leitungsenden 17a, 18a der Spulen sind zu Anschlußstellen 17b, 18b am Spulenträger geführt (FIG 2). Von dort führen bewegliche Drähte 17c, 18c zu elektrischen Leiterplatten 19, die im Inneren der Spulenhalter 15a bis 15d durch Stifte 16 mit Schlitzen 16a gehalten sind. Von jeder Leiterplatte 19 führen zwei elektrische Kabel 20, 21 zu Kanälen in den Spulenhaltern und von dort über das Innere der elastischen Schlauchteile 3e bis 3m (FIG 1) und den Schubschlauch zu einem Anschlußkasten 23 bzw. in FIG 6 zu dem Anschlußkörper 5 und von dort durch den Schubschlauch 6 zu einem Anschlußkasten 23, der mit einer Auswerte- und Anzeigeeinrichtung 22 verbunden ist.

Zur Lokalisierung eines Fehlers ist in der Sonde 1 eine Lageerkennungseinheit 25 vorgesehen. Diese Lageerkennungseinheit 25 ist - wie FIG 7,8 und 9 zeigen - aus einem elektrischen Widerstandsnetzwerk 26 mit mehreren zu Kontakten 27 bis 34 geführten Abgriffen gebildet. Die Kontakte 27 bis 34 sind am Innenumfang einer zweiteiligen hohlen Abstützung 8a unter Zwischenschaltung von Isolierkörpern in gleichmäßigen Abständen angeordnet (FIG 8). Den Kontakten 27 bis 34 ist ein Kontaktkörper 35 (FIG 1) in Gestalt eines kugelförmigen Körpers zugeordnet, der an einem in der Sonde 1 gespannten Seil 36 in der Sondenachse schwebend gehalten ist. Dieses Seil 36 ist einerseits über einen Bügel 37 mittels einer Schraube 38 im Inneren der Einführungsspitze 2 befestigt, durch die Abstützungen 8a bis 8e hindurchgeführt an den Spulenhaltern in Kanälen untergebracht (FIG 2 - 5) und andererseits an dem Anschlußkörper 5 für den Schubschlauch 6 verankert und von dort gegebenenfalls durch den Schubschlauch zum Anschlußkasten 23 geführt (FIG 1). Um das Seil 36 immer gespannt zu halten, ist in einem der Führungskörper 8c, eine Spannfeder 39 angeordnet. Die Widerstände 40 bis 47 des Widerstandsnetzwerkes 26 sind ebenfalls im Hohlraum einer Abstützung 8b untergebracht. Das Widerstandsnetzwerk 26 ist über elektrische Leitungen 48, 49 und der Kontaktkörper 35 über eine elektrische Leitung 50 mit der Auswerte- und Anzeigeeinrichtung 22 verbunden, die mit Anzeige- und/oder Registriergeräten 51, 52, 53 ausgestattet ist (FIG 6).

Im Registriergerät 51, das einen Oszillographenbildschirm hat, werden die Wirbelstromprüfergebnisse graphisch dargestellt.

Die Schubvorrichtung 7 ist mit einem Zählwerk 7a versehen, von dem elektrische Leitungen zu dem Anzeigegerät 51 führen, das die Einschublänge der Sonde im zu prüfenden Rohr anzeigt.

Die Leitungen 48 bis 50 sind durch das Innere der elastischen Schlauchstücke 3a - 3n geführt, wobei an den Spulenhaltern 15a bis 15d die Leitungen 48 bis 50 gemeinsam mit den Kabeln 20, 21 in Kanälen 54 untergebracht sind (FIG 5). Wie FIG 7 weiter zeigt, sind die elektrischen Leitungen 48, 49 an eine Gleichspannungsquelle 55 angeschlossen. Das Widerstandsnetzwerk 26 bildet einen Spannungsteiler, an dessen Abgriffen definierte Spannungen anstehen, die beispielsweise die Werte 2, 4, 6, 8, 10, 12, 14, 16 Volt haben. Gelangt die Sonde in den Bogenbereich des zu prüfenden Rohres, so berührt der Kontaktkörper 35 einen der Kontakte 27 bis 34. Da die Spulen 4a bis 4h den Kontakten 27 bis 34 fest zugeordnet sind, liegt somit die Lage der einzelnen Spulen im Rohrbogen fest. Die zwischen den Leitungen 49 und 50 anliegende Spannung ist ein Maß für die Winkellage der einzelnen Spulen in dem Bogen des zu prüfenden Rohres. Der jeweilige Spannungswert wird durch das als Spannungsschreiber ausgebildet Registriergerät 53 erfaßt.

Die zwischen den Abstützungen 8a bis 8e und Spulen 15a bis 15d angeordneten elastischen Schlauchstücke 3a bis 3n sind durch Hohlwellenteilstücke gebildet, die im wesentlichen aus einer biegsamen Drahtwendel 24 mit gegenseitiger radialer Verzahnung der Wendeln bestehen (FIG 1). Die Hohlwellenteilstücke haben wendelförmige Rippen 55′, die ein Außengewinde bilden. Die Abstützungen 8a bis 8e und Spulenhalter 15a bis 15d haben eine zentrale Durchgangsöffnung und an beiden Enden Ansätze 43′ mit Innengewinden 44′ zum Einschrauben der Hohlwellenteilstücke.

Die Genauigkeit der Erfassung der Winkellage eines Fehlers kann mit der Zahl der Spulen gesteigert werden, wenn es nicht - wie beim Ausführungsbeispiel gezeigt - ausreicht, mit vier Spulenpaaren Umfangswinkel von 45° zu bestreichen. Werden nur geringe Anforderungen an die Lokalisierung eines Fehlers gestellt, so kann man aber auch mit weniger als vier Wicklungspaaren, gegebenenfalls auch mit drei um 120° vesetzte Wicklungen auskommen.

## Patentansprüche

1. Einrichtung zur Wirbelstromprüfung der Rohre eines Wärmetauschers mit einem U-Rohrbündel, bei der eine Einführungsspitze einer Prüfsonde (1) über elastische Schlauchstücke (3a bis 3m) unter Zwischenschaltung mindestens dreier Spulen (4a bis 4h) mit einem Schubschlauch (6) verbunden ist, der mittels einer Schubvorrichtung in ein Rohr des Bündels einschiebbar ist, wobei die Spulen (4a bis 4h) am Umfang der Prüfsonde (1) und in der Sondenlängsachse gegeneinander versetzt sind, **dadurch gekennzeichnet**, daß die Spulen (4a bis 4h) in senkrecht zur Sondenachse vorgesehenen Aussparungen (11 bis 14) von Spulenhaltern (15a bis 15d) radial verschiebbar und federnd gelagert und mit Andrückflächen (9) versehen sind, die sich jeweils nur über einen Teil des Innenumfanges des Rohres erstrecken, und in der Prüfsonde (1) eine Lageerkennungseinheit (25) angeordnet ist.

2. Einrichtung nach Anspruch 1, bei der jeweils zwei Spulenträger (10a, 10b) mit je einer Spule in einer Aussparung (11 bzw. 12 bzw. 13 bzw. 14) angeordnet sind.

3. Einrichtung nach einem der vorhergehenden Ansprüche, bei der die Prüfsonde (1) vier in der Sondenlängsachse versetzt angeordnete Aussparungen (11 - 14) mit je zwei Spulenträgern (10a, 10b) hat, wobei die Aussparungen (11 - 14) gegeneinander um Winkel (α) von 45° versetzt angeordnet sind und die Andrückflächen (9) der Spulen sich überlappen.

4. Einrichtung nach einem der vorhergehenden Ansprüche, bei der die elektrischen Anschlüsse der Spulen (4a - 4h) jeweils mit einer Leiterplatte (19) verbunden sind, die in den Spulenhaltern (15a - 15d) gelagert ist.

5. Einrichtung nach Anspruch 1, bei der Abstützungen (8a - 8e) vorgesehen sind, wobei die Abstützungen (8a - 8e) und die Spulenhalter (15a - 15d) eine zentrale Durchgangsöffnung und an beiden Enden Ansätze (43′) mit Innengewinden (44′) zum Einschrauben von als elastische Schlauchstücke dienenden Hohlwellenteilstücken haben.

6. Einrichtung nach Anspruch 1, bei der die Lageerkennungseinheit (25) aus einem elektrischen Widerstandsnetzwerk (26) mit mehreren zu Kontakten (27 - 34) geführten Abgriffen gebildet ist, die Kontakte (27 - 34) in gleichmäßigen Abständen in der Prüfsonde (1), insbesondere am Innenumfang einer hohlen Abstützung (8a) angeordnet sind und den Kontakten ein Kontaktkörper (35), insbesondere in Gestalt einer Kontaktkugel zugeordnet ist, der an einem in der Sonde gespannten Seil (36) angeordnet und über elektrische Leitungen (48 - 50) mit einer Auswerteeinrichtung (22) verbunden ist.

7. Einrichtung nach Anspruch 6, bei der das eine Ende des Seiles (36) an der Einführungsspitze (2) und unter Zwischenschaltung einer Spannfeder (39) an einem Anschlußkasten (23) für den Schubschlauch (6) befestigt ist.

8. Einrichtung nach Anspruch 1, bei der die Spulenträger (10a, 10b) parallel zur Sondenachse angeordnete Achszapfen (10c, 10d) haben, die in radialen Schlitzen (15e, 15f) der Spulenhalter (15a, 15d) federnd verschiebbar gelagert sind.

## Claims

1. A device for eddy-current testing of the tubes of a heat exchanger comprising a U-shaped bunch of tubes, an insertion tip of a test probe (1) being connected via resilient hose portions (3a to 3m) and with interposition of at least three coils (4a to 4h) to a thrust hose (6) for insertion by a thrust device into a tube in the bunch, the coils (4a to 4h) being offset relative to one another on the periphery of the test probe (1) and along the longitudinal axis of the probe, characterised in that the coils (4a to 4h) are resiliently mounted so as to be radially movable in recesses (11 to 14) in coil holders (15a to 15d) at right angles to the probe axis, and have pressure surfaces (9), each extending over only a part of the inner periphery of the tube, and a position-recognising unit (25) is disposed in the test probe (1).

2. A device according to claim 1, in which two coil carriers (10a, 10b) each with one coil are disposed in a recess (11, 12, or 13, 14).

3. A device according to any of the preceding claims, in which the test probe (1) has four recesses (11 - 14) offset along the longitudinal axis of the probe and each with two coil carriers (10a, 10b), the recesses (11 - 14) being offset relative to one another by angles (α) of 45° and the pressure surfaces (9) of the coils overlapping.

4. A device according to any of the preceding claims, in which the electric connections of the coils (4a - 4h) are each connected to a printed circuit board (19) mounted in the coil holders (15a, 15d).

5. A device according to claim 1, provided with abutments (8a - 8e), the abutments (8a - 8e) and the coil holders (15a - 15d) having a central through opening and being provided at both ends with attachments (43′) with inner threads (44′) for screwing in hollow-shaft components serving as resilient hose pieces.

6. A device according to claim 1, in which the position-recognising unit (25) comprises an electric resistance network (26) with a number of taps guided relative to contacts (27 - 34), the contacts (27 - 34) are disposed at uniform intervals in the test probe (1), more particularly on the inner periphery of a hollow abutment (8a), and the contacts are associated with a more particularly spherical contact member (35) which is disposed on a cable (36) clamped in the probe and is connected by electric lines (48 - 50) to an evaluating device (22).

7. A device according to claim 6, in which one end of the cable (36) is secured to the insertion tip (2) and, with interposition of a tension spring (39), is secured to a terminal box (23) for the thrust hose (6).

8. A device according to claim 7, in which the coil carriers (10a, 10b) have pivots (10c, 10d) disposed parallel to the probe axis and mounted so as to be resiliently movable in radial slots (15e, 15f) of the coil holders (15a, 15d).

## Revendications

1. Dispositif pour contrôler, par courants de Foucault, un échangeur de chaleur comportant un faisceau de tubes en U, dans lequel une pointe d'introduction d'une sonde de contrôle (1) est reliée par l'intermédiaire d'éléments élastiques de tuyau (3a à 3m), moyennant l'interposition d'au moins trois bobines (4a à 4h), à un tuyau emmanchable (6), qui peut être repoussé au moyen d'un dispositif de poussée dans un tube du faisceau, les bobines (4a à 4h) étant décalées mutuellement sur le pourtour de la sonde de contrôle (1) et sur l'axe longitudinal de la sonde, caractérisé par le fait que les bobines (4a à 4h) sont montées élastiquement et de manière à être déplaçables radialement dans des évidements (11 à 14), prévus perpendiculairement à l'axe de la sonde, de supports de bobines (15a à 15d) et sont pourvus de surfaces de pression (9), qui s'étendent respectivement seulement sur une partie du pourtour intérieur du tube, et une unité d'identification de position (25) est disposée dans la sonde de contrôle (1).

2. Dispositif suivant la revendication 1, dans lequel respectivement deux supports de bobine (10a, 10b) comportant chacun une bobine sont disposés dans un évidement (11 ou 12 ou 13 ou 14).

3. Dispositif suivant l'une des revendications précédentes, dans lequel la sonde de contrôle (1) possède quatre évidements (11 - 14) qui sont disposés avec décalage suivant l'axe longitudinal de la sonde et comporte chacun deux supports de bobines (10a, 10b), les évidements (11 - 14) étant disposés en étant décalés mutuellement d'un angle (a) de 45°, tandis que les surfaces de serrage (9) des bobines se chevauchent.

4. Dispositif suivant l'une des revendications précédentes, dans lequel les bornes électriques des bobines (4a - 4h) sont reliées respectivement à une plaquette à circuits imprimés (19), qui est montée dans les supports de bobines (15a - 15d).

5. Dispositif suivant la revendication 1, dans lequel il est prévu des supports (8a - 8e), et les supports (8a - 8e) et les porte-bobines (15a - 15d) possèdent une ouverture centrale de passage et comportent, au niveau des deux extrémités, des embouts saillants (43′) comportant des taraudages (44′) permettant le vissage d'éléments d'arbre creux utilisés en tant qu'éléments de tuyau élastiques.

6. Dispositif suivant la revendication 1, dans lequel l'unité d'identification de position (25) est formée par un réseau de résistances électriques (26) comportant plusieurs prises aboutissant à des contacts (27-34), ces contacts étant disposés à des distances uniformes dans la sonde de contrôle (1), notamment sur le pourtour intérieur d'un support creux (8a), et aux contacts étant associé un corps de contact (35), qui possède notamment la forme d'une bille de contact et qui est disposé sur un câble (36) tendu dans la sonde et est relié à un dispositif d'évaluation (22) par l'intermédiaire de conducteurs électriques (48 - 50).

7. Dispositif suivant la revendication 6, dans lequel une extrémité du câble (36) est fixée à la pointe d'introduction (2) et, moyennant le montage intercalé d'un ressort de tension (39), sur une boîte de raccordement (23) pour le tuyau emmanchable (6).

8. Dispositif suivant la revendication 1, dans lequel les supports de bobines (10a, 10b) portent des tourillons (10c, 10d) qui sont parallèles à l'axe de la sonde et sont supportés, de manière à être déplaçables élastiquement, dans des fentes radiales (15e, 15f) des supports de bobines (15a, 15d).
